# EUROPÄISCHE PATENTANMELDUNG

(11) **EP 4 708 267 A1**
(43) Veröffentlichungstag der Anmeldung: **11.03.2026**
(21) Anmeldenummer: 25200723.2
(22) Anmeldetag: 08.09.2025
(51) Int. Cl.: G09F 13/04, G09F 21/04, G09F 7/18

(54) **WARNTAFEL**

(30) Priorität: 10.09.2024 DE 202024105189 U
(71) Anmelder: Frits Dijk International BV, 5674 VN Nuenen (NL)
(72) Erfinder: Dijk, Louis, 5674 Nuenen (NL); Wesenbeek, Max, 5674 Nuenen (NL)
(74) Vertreter: Söllner, Udo

(57) **Zusammenfassung**

Es ist ein Warnmittel (1) für einen Transporter vorgesehen, umfassend:
eine Tafel (10);
eine erste Aufnahme (20);
einen Träger (30);
ein erstes Beleuchtungsmittel (40);
wobei die Tafel (10) und die erste Aufnahme (20) miteinander als eine Warneinheit (200) verbunden sind,
wobei die Tafel (10) flächig ist,
wobei die Tafel (10) eine Hauptseite (101) und eine Sekundärseite (102) aufweist und die Hauptseite (101) mit Warnstreifen versehen ist,
wobei das erste Beleuchtungsmittel (40) an der ersten Aufnahme (20) angeordnet ist,
wobei das erste Beleuchtungsmittel (40) auf der Hauptseite (101) der Tafel (10) sichtbar ist,
wobei die Warneinheit (200) mit dem Träger (30) verbunden ist,
wobei
der Träger (30) zur lösbaren Anordnung an einer Aufnahmevorrichtung (300) ausgebildet ist und der Träger (30) mit der Aufnahmevorrichtung (300) schwenkbar und/oder verschiebbar verbindbar ist.

## Beschreibung

Die Erfindung betrifft ein Warnmittel zum Anzeigen von Warnhinweisen im Zusammenhang mit Kraftfahrzeugen aller Art und insbesondere Schwertransportern.

Aus dem Stand der Technik sind fest verbaute Leuchtsignale und Anzeigetafeln bekannt, wie sie beispielsweise bei Rettungswagen verwendet werden. In der Regel befindet sich auf dem Dach eines solchen Fahrzeugs ein Blaulicht als Leuchtsignal. Baustellenfahrzeuge werden mit warnenden Weiß-Rot-Weiß-Streifen beklebt. Aus der DE 2020 1400 0491U1 ist eine Warnvorrichtung zum Anzeigen eines Warnhinweises, die als flächenartige flexible Struktur ausgebildet ist und ein Leuchtmittel umfasst, bekannt. Durch die Anmelderin ist ein Warnschild bekannt geworden, das als nichtklappbar oder klappbar mit einer festen Halterung ausgestattet ist.

Frachtguttransporte werden im Straßenverkehr, die nicht maß- oder gewichtsgerecht sind, als Großraum- und Schwertransporte und auch als Schwerguttransport bezeichnet. Solche Transporte können regional auch als Ausnahmetransporte bezeichnet werden. Ein Schwertransporter ist ein Fahrzeug zur Ausführung solcher Transporte. Die Transportgüter mit ungewöhnlich großen Breiten müssen mit adäquaten Warnhinweisen versehen werden, die besonders auf die außergewöhnlichen Breite aufmerksam machen.

Es sind bereits Warnschilder bekannt geworden, die mittels Stangen mit dem Fahrzeug verschraubt sind und nach der Beendigung des Transportes wieder abmontiert werden. Die Anbringung der bekannten Warnschilder an Fahrzeugen ist aufwendig und setzt besondere Verbindungselemente sowohl an den Fahrzeugen als auch an den Warnschildern voraus, die bei jedem Fahrzeug anders ausfallen können.

Aufgabe der Erfindung ist es daher, ein Warnmittel bereitzustellen, welches eine verbesserte Handhabung und eine vereinfachte Anbringung des Warnmittels an dem Fahrzeug ermöglicht. Außerdem soll ein Leuchtmittel des Warnmittels gegen eine Fremdeinwirkung gut geschützt sein.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft ein Warnmittel für einen Transporter und umfasst eine Tafel, eine erste Aufnahme, einen Träger und ein erstes Beleuchtungsmittel, wobei die Tafel und die erste Aufnahme miteinander als eine Warneinheit verbunden sind, wobei die Tafel flächig ist, und eine Hauptseite und eine Sekundärseite aufweist und die Hauptseite mit Warnstreifen versehen ist, wobei das erste Beleuchtungsmittel an der ersten Aufnahme angeordnet ist und auf der Hauptseite der Tafel sichtbar ist, wobei die Warneinheit mit dem Träger verbunden ist, wobei der Träger zur lösbaren Anordnung an einer Aufnahmevorrichtung ausgebildet ist und der Träger mit der Aufnahmevorrichtung schwenkbar und/oder verschiebbar verbindbar ist.

Das erfindungsgemäße Warnmittel kann als ein universelles Modul an Fahrzeugen und insbesondere an Schwertransportern angebracht werden.

Erfindungsgemäß umfasst das Warnmittel eine Tafel, die überwiegend eine flächige Struktur mit ausreichender Festigkeit und Steifigkeit hat, um andere Gegenstände des Warnmittels aufzunehmen und gegen Belastungen wie Fahrtwind standzuhalten. D.h., die Tafel ist nicht wie eine Folie zusammenrollbar oder flexibel faltbar. Flächig bedeutet, dass die Breite und die Länge der Tafel wesentlich größer sind als die Dicke der Tafel. Das Material der Tafel kann beispielsweise Kunststoff oder Metall sein. Die Warneinheit wird mittels eines Trägers an dem Fahrzeug befestigt. Die Tafel ist mit einer gestreckten Aufnahme verbunden, die Platz für mindestens ein erstes ebenfalls gestreckt ausgebildetes Leuchtmittel bereitstellt.

Gestreckt bedeutet, dass die Länge der Aufnahme vielfach größer als die Bereite der Aufnahme ist. Das Leuchtmittel ist in der Aufnahme versenkt, so dass das Leuchtmittel gegen äußere Einwirkungen geschützt ist. Die Aufnahme kann mittels eines Kunststoffwerkstoffs gebildet sein. Die Tafel, die Aufnahme und das Leuchtmittel bilden zusammen die Warneinheit.

Die Tafel hat eine Hauptseite und eine Sekundärseite. In einem linkshändigen kartesischen Koordinatensystem ist die Fahrtrichtung des Transporters die +Z Richtung und die aus der Fahrbahn herausragende Richtung die +Y Richtung. Die Tafel liegt überwiegend in der XY-Ebene. Die Höhe und die Breite einer Warneinheit sind Werte, die abhängig von den Kundenwünschen und Vorschriften in einem Land unterschiedlich sein können und liegen in der Regel zwischen 400 und 500 mm. Die Dicke der Tafel ist in Größenordnung von 1 mm.

In der Regel ist mindestens die Hauptseite der Tafel mit warnenden Weiß-Rot-Weiß-Streifen, d.h., Warnstreifen, versehen. Wenn eine beidseitige Warnfunktionalität gewünscht ist, kann auch die Sekundärseite der Warntafel mit Warnstreifen versehen sein. Die Hauptseite der Warneinheit ist die Seite, die von den nachfolgenden Verkehrsteilnehmern wahrgenommen wird. Die Sekundärseite der Warneinheit kann von den entgegenkommenden Verkehrsteilnehmern, von der -Z Richtung gesichtet oder von vorausfahrenden Verkehrsteilnehmern im Rückspiegel gesehen werden. Die Warneinheit ist mit einem langgestreckten Beleuchtungselement in der Form beispielsweise einer LED Leuchte versehen, welche auf einer dem nachfolgenden Verkehr zugewandten Seite rot leuchtet und auf der dem vorausfahrenden Verkehr zugewandten Seite weiß leuchtet.

Eine Warneinheit kann sowohl auf der Hauptseite als auch auf der Sekundärseite mit Warnsignalen ausgestattet sein, die universell sowohl an der Fahrzeughinterseite als auch an der Fahrzeugvorderseite oder an anderen sinnvollen Stellen am Fahrzeug eingesetzt werden kann. In diesem Fall hat die Tafel eine erste Aufnahme mit einer ersten Beleuchtungsmittel auf der Hauptseite und eine zweite Aufnahme mit einer zweiten Beleuchtungsmittel auf der Sekundärseite.

Alternativ kann eine universell einsetzbare Warneinheit zwei Beleuchtungsmittel in nur einer einzigen Aufnahme umfassen, so dass die Warneinheit mit beispielsweise zwei langgestreckten LED Leuchten versehen ist, welche die vorstehend erwähnten Leuchtfunktionen erfüllen.

Das Warnmittel umfasst eine Warneinheit und einen Träger, der mit der Warneinheit fest verbunden sein kann. Hierzu können beispielsweise Schraub-, Schweiß- oder Nietverbindungen angewendet werden. Die Warneinheit kann jedoch mit dem Träger verdrehbar verbunden sein. Das Verbindungsstück hier kann ein Gelenk z.B. ein Scharniergelenk sein. Die Hauptachse des Scharniergelenkes liegt in diesem Fall entlang der Hauptachse des Trägers, so dass die Warneinheit um die Hauptachse des Trägers verdrehbar ist. Alternativ kann die Hauptachse des Scharniergelenkes senkrecht zur Hauptachse des Trägers angeordnet sein, so dass die Warneinheit zu einer Position senkrecht zum Träger verdreht werden kann. Mit Hilfe eines solchen Gelenkes kann die Warneinheit weggeklappt werden.

Der Träger kann mittels einer zum Fahrzeug gehörigen Aufnahmevorrichtung lösbar mit dem Fahrzeug schwenkbar und/oder verschiebbar verbunden werden, so dass die Warneinheit bei einem Schwertransporteinsatz beispielsweise zu einer seitlichen Position am Fahrzeug, überwiegend in die ± X Richtung, und beabstandet davon ausgefahren werden kann. Lösbar bedeutet, dass der Träger von der Aufnahmevorrichtung aufgenommen und davon wieder entfernt werden kann. Die lösbare Verbindung kann beispielsweise mit einer Schraub- oder Klemmverbindung realisiert werden. Der Vorteil solch einer Anordnung ist, dass die Warneinheit nach der Beendigung eines Schwertransporteinsatzes zu einer Verstauposition verlagert werden kann.

Die Tafel der Warneinheit kann mindestens zwei Tafelabschnitte umfassen, die mittels eines Gelenkes, z.B. eines Scharniergelenkes, miteinander klappbar verbunden sind. Im zusammengeklappten Zustand können die Tafelabschnitte mittels eines Verschlusses lösbar verbindbar sein. Beispiele für die in Frage kommenden Verschlüsse sind, Schraubverschluss, Drehverschluss oder Klappverschluss. Der Vorteil solch einer Anordnung ist, dass die Warneinheit nach der Beendigung eines Schwertransporteinsatzes zu einer Klappposition verkleinert werden kann.

Die Warneinheit kann auch mit einer Rundumleuchte versehen sein. Eine Rundumleuchte ist eine Warnleuchte, die Licht über einen Bereich von 360° ausstrahlt. Die Rundumleuchte ist mit der Tafel verbunden. Die Verbindung kann eine Schraubverbindung, eine Steckverbindung oder eine Gelenkverbindung sein.

Eine Rundumleuchte für eine bereits erwähnte universell einsetzbare Warneinheit muss für jede Ausrichtung der Warneinheit angepasst werden. Wenn die Warneinheit 180° um die Z-Achse des Transporters verdreht wird, würde eine mit der Warneinheit fest verbundene Rundumleuchte in unpassender Weise umgekehrt angebracht sein. Daher ist es vorteilhaft, die Orientierung der Rundumleuchte bezogen auf die Warneinheit ändern zu können. Dies kann z.B. mittels eines Drehgelenkes geschehen. Das Drehgelenk ist mit der Tafel verbunden und die Rundumleuchte ist mit dem Drehgelenk verbunden, so dass die Rundumleuchte in Bezug auf die Warneinheit verdreht werden und immer in +Y Richtung aufrecht orientiert sein kann. Anstatt eines Drehgelenkes können Steckverbindungen verwendet werden, so dass die Rundumleuchte immer in +Y Richtung aufrecht orientiert ist. Die Warneinheit wird mittels eines elektrischen Kabels mit der elektrischen Energieversorgung des Fahrzeuges verbunden. Die Energieversorgung kann auch über eine Batterie oder Akkumulator sichergestellt werden.

Das elektrische Kabel hat einen Externanschluss zum Verbinden mit der elektrischen Energieversorgung des Fahrzeuges oder mit der Batterie. "Extern" deutet auf eine Anschlussstelle zu einer Energiequelle außerhalb des Warnmittels hin. Das Kabel hat weitere elektrische Anschlüsse, so dass für jeden elektrischen Verbraucher ein elektrischer Anschluss vorhanden ist. Elektrische Verbraucher sind die Beleuchtungsmittel und die Rundumleuchte. Die elektrische Versorgung zu den Verbrauchern kann jeweils mittels eines Schalters verbunden oder unterbrochen werden. Das Kabel kann auch eine Steuerungsleitung umfassen, so dass die elektrische Versorgung zu den Verbrauchern mittels der Steuerungsleitung beispielsweise durch den Fahrer des Transporters betätigt werden kann.

Die Warneinheit kann eine elektrische Anschlussleiste umfassen, die über das elektrische Kabel mit der externen Energiequelle elektrisch verbunden ist. Die Anschlussleiste umfasst elektrische Anschlüsse zur elektrischen Versorgung von Verbrauchern, die die Beleuchtungsmittel und die Rundumleuchte sind. Die elektrische Energie zu den Verbrauchern kann mittels Schalter oder mittels einer Steuerungsleitung ein- und ausgeschaltet werden.

Die Erfindung wird im Folgenden anhand von Ausführungsbeispielen näher erläutert. Es zeigen:
Fig. 1 die Warnmittel,
Fig. 2 eine Warneinheit auf der Hauptseite,
Fig. 3 die Warneinheit auf der Sekundärseite,
Fig. 4 die Warneinheit gelenkig verbunden mit dem Träger,
Fig. 5 die Warneinheit gelenkig verbunden mit dem Träger,
Fig. 6 die Warneinheit fest verbunden mit dem Träger,
Fig. 7 perspektivische Darstellung der Warneinheit mit klappbaren Tafelabschnitten,
Fig. 8 die Warneinheit mit klappbaren Tafelabschnitten auf der Hauptseite,
Fig. 9 die Warneinheit mit zusammengeklappten Tafelabschnitten,
Fig. 10 die Warneinheit mit zwei Beleuchtungsmitteln,
Fig. 11 die Warneinheit mit verdrehbarer Rundumleuchte auf der Sekundärseite,
Fig. 12 die Warneinheit mit steckbarer Rundumleuchte auf der Sekundärseite,

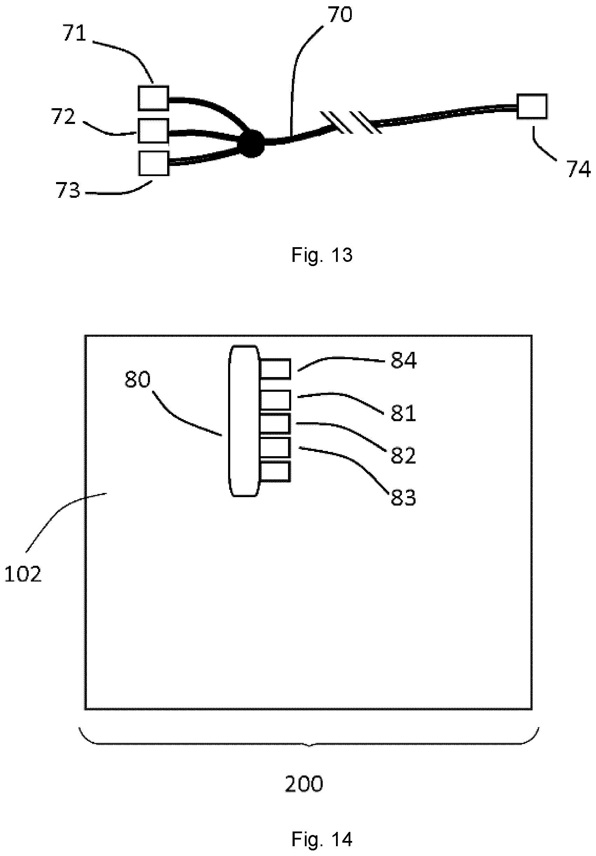

Fig. 13 das elektrische Kabel, und
Fig. 14 die elektrische Versorgungsleiste.

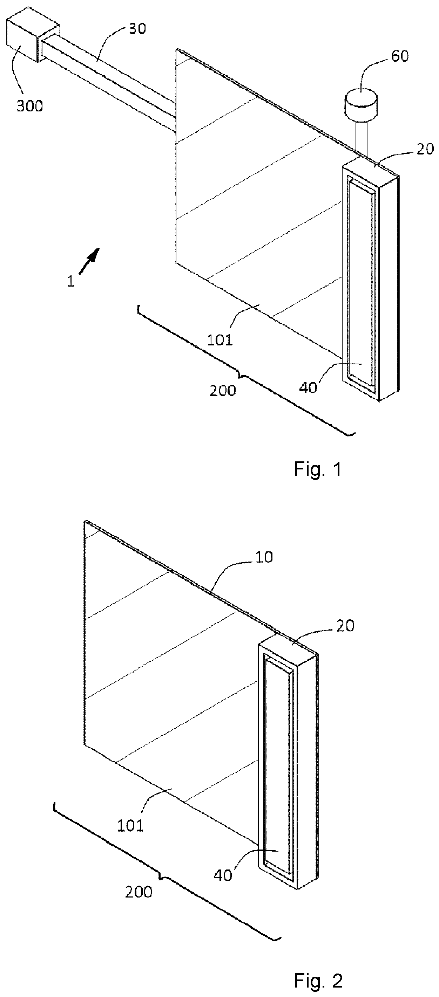

**In** Fig. 1 ist ein Warnmittel 1 für einen Transporter, insbesondere für einen Schwertransporter gemäß der vorliegenden Erfindung dargestellt.

Das Warnmittel 1 umfasst eine Tafel 10, eine erste Aufnahme 20, einen Träger 30 und ein erstes Beleuchtungsmittel 40. Das erste Beleuchtungsmittel 40 ist in der ersten Aufnahme 20 angeordnet. Die Tafel 10 und die erste Aufnahme 20 mit dem Beleuchtungsmittel 40 bilden eine Warneinheit 200 aus. Die Tafel 10 ist flächig und weist genügend Festigkeit auf, um weitere Komponente der Warneinheit 200 aufzunehmen. Die Tafel 10 hat eine Hauptseite 101 und eine Sekundärseite 102.

Die Hauptseite 101 ist mit Warnstreifen versehen. Das erste Beleuchtungsmittel 40 ist auf der Hauptseite 101 der Tafel 10 sichtbar, so dass es von den, dem Transporter folgenden Verkehrsteilnehmern als ein rotes Licht wahrgenommen werden kann (Fig. 2). Die Warneinheit 200 ist mit dem Träger 30 verbunden. Der Träger 30 ist mit einer Aufnahmevorrichtung 300, die am Transporter angeordnet ist, lösbar verbunden. Der Träger 30 ist in Bezug auf die Aufnahmevorrichtung 300 verschiebbar angeordnet. Der Träger 30 kann in Bezug auf die Aufnahmevorrichtung 300 schwenkbar angeordnet sein. Eine verschiebbare und schwenkbare Anordnung ermöglicht eine gute Handhabe, die Warneinheit 200 leichter in eine Verstauposition zu bringen.

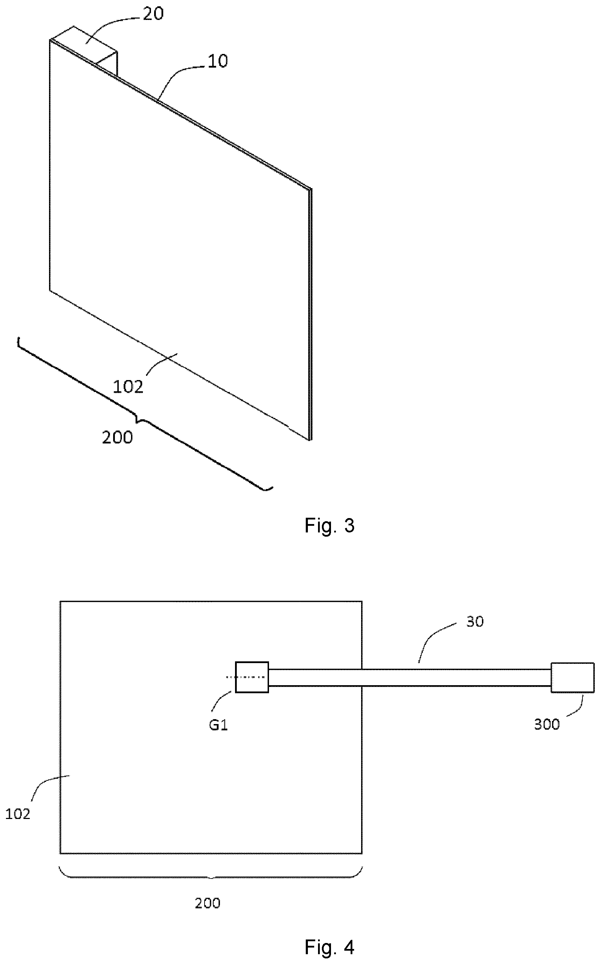

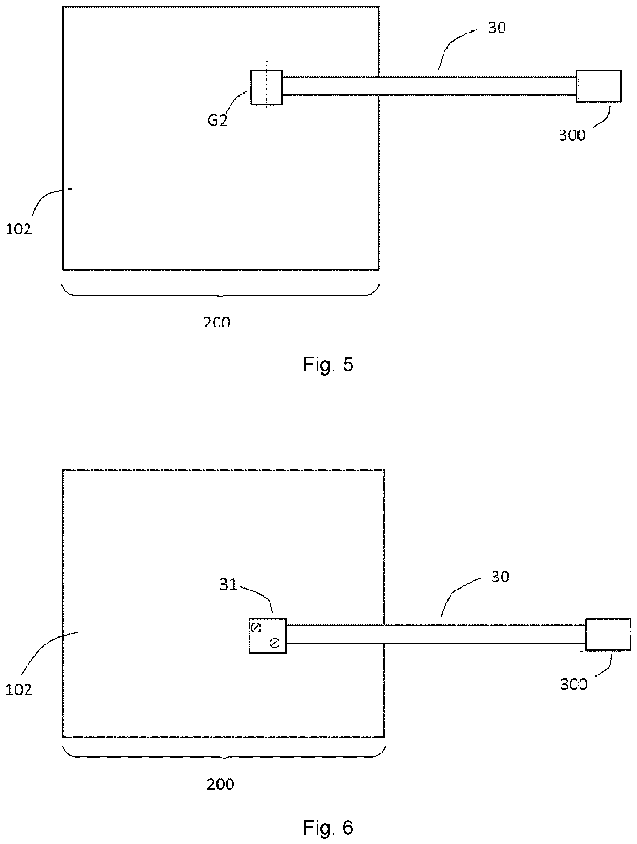

In Fig. 3 ist die Warneinheit 200 auf der Sekundärseite dargestellt. Die Sekundärseite bietet Platz für die Anbringung von vielen Komponenten des Warnmittels 1. Nach einer Ausführungsform der Erfindung ist die Warneinheit 200 mit dem Träger 30 mittels eines Gelenkes G1, das in diesem Beispiel ein Scharniergelenk ist, gelenkig verbunden. Die Hauptachse des Scharniergelenkes ist in diesem Fall entlang der Hauptachse des Trägers 30 ausgerichtet, so dass die Warneinheit 200 um die Hauptachse des Trägers 30 verdrehbar ist (Fig. 4). Alternativ kann die Hauptachse des Scharniergelenkes G2 senkrecht zur Hauptachse des Trägers 30 angeordnet sein, so dass die Warneinheit 200 zu einer Position senkrecht zum Träger 30 verdreht werden kann. Mit Hilfe eines solchen Gelenkes kann die Warneinheit 200 weggeklappt werden, wenn der Transporter nicht mehr im Schwertransportdienst ist, wie dies anhand von Fig. 5 der Zeichnung ersichtlich ist.

Gemäß einer weiteren, in Fig. 6 der Zeichnung dargestellten Ausführungsform der Erfindung, ist die Warneinheit 200 mit dem Träger fest verbunden. In diesem Fall kann die Verbindung mit einer Schraub-, Niet- oder Schweißverbindung realisiert werden. Gemäß einer Ausführungsform der Erfindung umfasst die Tafel 10 der Warneinheit 200 mindestens zwei Tafelabschnitte 11 und 12, die mittels eines Gelenkes G3, z.B. eines Scharniergelenkes, miteinander klappbar verbunden sind. Im zusammengeklappten Zustand können die Tafelabschnitte11 und 12 mittels eines Verschlusses lösbar verbindbar sein.

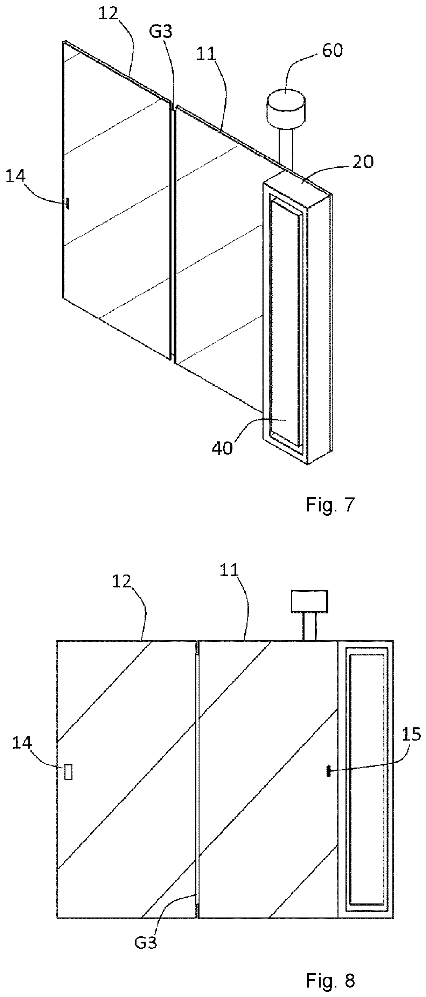

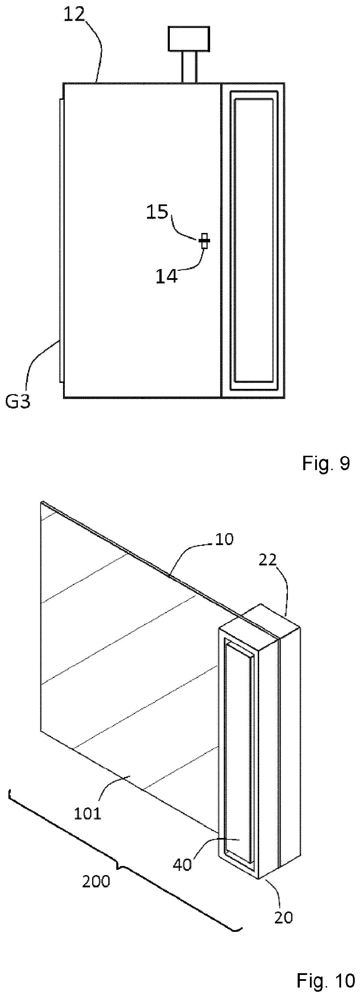

Beispiele für die in Frage kommenden Verschlüsse sind, Schraubverschluss, Drehverschluss oder Klappverschluss oder Drehknebel. Der Vorteil solch einer Anordnung ist, dass die Warneinheit 200 nach der Beendigung eines Schwertransporteinsatzes zu einer Klappposition verkleinert werden kann, wie dies anhand von Fig. 7, Fig. 8 und Fig. 9 der Zeichnung ersichtlich ist.

In Fig. 8 wird eine Ausführungsform mit einem Drehverschluss dargestellt. Ein zweiter Tafelabschnitt 12 weist eine Öffnung 14 auf und ein erster Tafelabschnitt 11 weist einen zur Öffnung 14 passenden Drehverschluss 15 auf. Der zweite Tafelabschnitt 12 und der erste Tafelabschnitt 11 können im zusammengeklappten Zustand über den Drehverschluss 15 lösbar verbunden werden. Die Warneinheit 200 kann auch eine mit der Tafel 20 verbundene Rundumleuchte 60 umfassen, wie dies anhand von Fig. 1, Fig. 11 und Fig. 12 dargestellt ist.

Die Verbindung kann eine Schraubverbindung, eine Steckverbindung oder eine Gelenkverbindung sein. Bei einer Schaubverbindung ist die Rundumleuchte 60 unbeweglich an der Tafel 20 befestigt. Ein Drehgelenk G4 ist mit der Tafel 20 verbunden und die Rundumleuchte 60 ist mit dem Drehgelenk G4 verbunden, so dass die Rundumleuchte 60 in Bezug auf die Warneinheit 200 verdreht werden und immer in +Y Richtung aufrecht orientiert sein kann. Alternativ können Steckverbindungen 66 verwendet werden, um die Rundumleuchte 60 mit der Tafel 20 zu verbinden, so dass die Rundumleuchte 60 immer in +Y Richtung aufrecht orientiert ist.

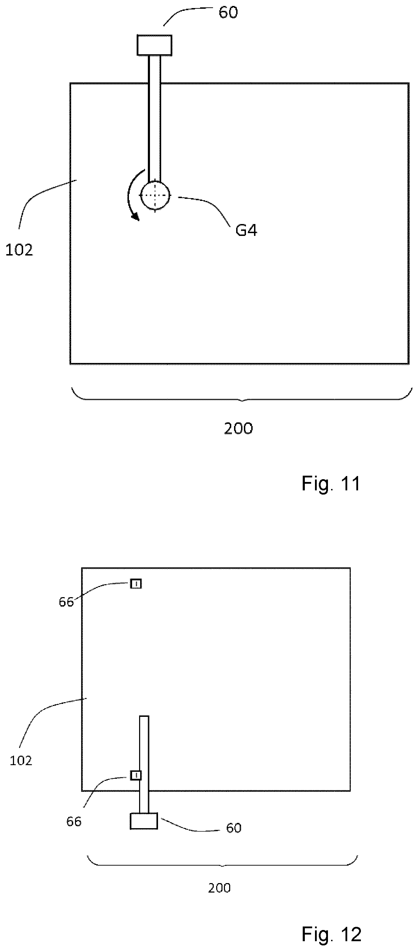

Gemäß einer weiteren Ausführungsform der Erfindung wird die Warneinheit 200 mittels eines elektrischen Kabels 70 mit der elektrischen Energieversorgung des Fahrzeuges verbunden. Die Energieversorgung kann auch über eine Batterie oder Akkumulator sichergestellt werden. Das elektrische Kabel 70 hat einen Externanschluss 74 zum Verbinden mit der elektrischen Energieversorgung des Fahrzeuges oder mit der Batterie. Das Kabel 70 hat weitere elektrische Anschlüsse, so dass für jeden elektrischen Verbraucher ein elektrischer Anschluss 71, 72 und 73 vorhanden ist. Elektrische Verbraucher sind die Beleuchtungsmittel 40 und 50 sowie die Rundumleuchte 60. Die elektrische Versorgung zu den Verbrauchern kann jeweils mittels eines Schalters verbunden oder unterbrochen werden. Das Kabel 70 kann auch eine Steuerungsleitung umfassen, so dass die elektrische Versorgung zu den Verbrauchern mittels der Steuerungsleitung beispielsweise durch den Fahrer des Transporters betätigt werden kann (Fig. 12). Die Warneinheit 200 kann eine elektrische Anschlussleiste 80 umfassen, die über das elektrische Kabel 70 mit der externen Energiequelle elektrisch verbunden ist. Das Kabel 70 ist mit einem Stecker 84 der Anschlussleiste 80 elektrisch verbunden und versorgt die Anschlussleiste 80 mit elektrischer Energie. Die Anschlussleiste 80 umfasst elektrische Anschlüsse 81, 82 und 83 zur elektrischen Versorgung von Verbrauchern, die die Beleuchtungsmittel 40 und 50 sowie die Rundumleuchte 60 sind. Die elektrische Energie zu den Verbrauchern kann mittels Schalter oder mittels einer Steuerungsleitung ein- und ausgeschaltet werden.

### Bezugszeichenliste:

- 1: Warnmittel
- 10: Tafel
- 11: erster Tafelabschnitt
- 12: zweiter Tafelabschnitt
- 14: Öffnung
- 15: Drehverschluss
- 20: erste Aufnahme
- 22: zweite Aufnahme
- 30: Träger
- 31: feste Verbindung
- 40: erstes Beleuchtungsmittel
- 50: zweites Beleuchtungsmittel
- 60: Rundumleuchte
- 66: Verbindungsmittel für die Rundumleuchte
- 70: elektrisches Kabel
- 71: erster elektrischer Anschluss
- 72: zweiter elektrischer Anschluss
- 73: dritter elektrischer Anschluss
- 74: Externanschluss
- 80: elektrische Versorgungsleiste
- 81: erster elektrischer Leistenanschluss
- 82: erster elektrischer Leistenanschluss
- 83: erster elektrischer Leistenanschluss
- 84: Stecker
- 101: Hauptseite
- 102: Sekundärseite
- 200: Warneinheit
- 300: Aufnahmevorrichtung
- G1: erstes Gelenk
- G2: zweites Gelenk
- G3: drittes Gelenk
- G4: viertes Gelenk

## Patentansprüche

1. Warnmittel (1) für einen Transporter, umfassend:
eine Tafel (10);
eine erste Aufnahme (20);
einen Träger (30);
ein erstes Beleuchtungsmittel (40);
wobei die Tafel (10) und die erste Aufnahme (20) miteinander als eine Warneinheit (200) verbunden sind,
wobei die Tafel (10) flächig ist,
wobei die Tafel (10) eine Hauptseite (101) und eine Sekundärseite (102) aufweist und die Hauptseite (101) mit Warnstreifen versehen ist,
wobei das erste Beleuchtungsmittel (40) an der ersten Aufnahme (20) angeordnet ist,
wobei das erste Beleuchtungsmittel (40) auf der Hauptseite (101) der Tafel (10) sichtbar ist,
wobei die Warneinheit (200) mit dem Träger (30) verbunden ist,
**dadurch gekennzeichnet, dass**
der Träger (30) zur lösbaren Anordnung an einer Aufnahmevorrichtung (300) ausgebildet ist und der Träger (30) mit der Aufnahmevorrichtung (300) schwenkbar und/oder verschiebbar verbindbar ist.

2. Warnmittel (1) nach Anspruch 1, **dadurch gekennzeichnet, dass** die Warneinheit (200) mittels eines ersten Gelenkes (G1) mit dem Träger (30) verbunden und um die Längsachse des Trägers (30) relativ zum Träger (30) verdrehbar ist, oder die Warneinheit (200) mittels eines zweiten Gelenkes (G2) mit dem Träger (30) verbunden und um eine Achse senkrecht zur Längsachse des Trägers (30) relativ zum Träger (30) verdrehbar ist, oder die Warneinheit (200) mittels einer festen Verbindung (31) mit dem Träger (30) unbeweglich verbunden ist.

3. Warnmittel (1) nach Anspruch 1 oder 2, **dadurch gekennzeichnet, dass** die Tafel (10) mindestens einen ersten Tafelabschnitt (11) und einen zweiten Tafelabschnitt (12) umfasst, die über ein drittes Gelenk (G3) miteinander verbunden sind, wobei der zweite Tafelabschnitt (12) um das dritte Gelenk (G3) auf den ersten Tafelabschnitt (12) umklappbar ist, wobei der zweite Tafelabschnitt (12) und der erste Tafelabschnitt (11) im zusammengeklappten Zustand mittels eines Verschlusses lösbar verbindbar sind und wobei der zweite Tafelabschnitt (12) eine Öffnung (14) aufweist und der erste Tafelabschnitt (11) einen zur Öffnung (14) passenden Drehverschluss (15) aufweist und wobei der zweite Tafelabschnitt (12) und der erste Tafelabschnitt (11) im zusammengeklappten Zustand über den Drehverschluss (15) lösbar verbindbar sind.

4. Warnmittel (1) nach einem der vorstehenden Ansprüche, **dadurch gekennzeichnet, dass** die Warneinheit (200) eine zweite Aufnahme (22) und ein zweites Beleuchtungsmittel (50) auf der Sekundärseite (102) der Tafel (10) aufweist, wobei das zweite Beleuchtungsmittel (50) in der zweiten Aufnahme (22) angeordnet ist, wobei das zweite Beleuchtungsmittel (50) auf der Sekundärseite (102) der Tafel (10) sichtbar ist, und die Sekundärseite (102) der Tafel (10) mit Warnstreifen versehen ist.

5. Warnmittel (1) nach einem der vorstehenden Ansprüche, **dadurch gekennzeichnet, dass** die erste Aufnahme (20), das erste Beleuchtungsmittel (40), die zweite Aufnahme (22) und das zweite Beleuchtungsmittel (50) gestreckt ausgebildet sind.

6. Warnmittel (1) nach einem der vorstehenden Ansprüche, **dadurch gekennzeichnet, dass** das Warnmittel (1) eine Rundumleuchte (60) umfasst, welche mittels eines vierten Gelenkes (G4) mit der Warneinheit (200) verdrehbar verbunden ist.

7. Warnmittel (1) nach einem der vorstehenden Ansprüche, **dadurch gekennzeichnet, dass** die Warneinheit (200) ein elektrisches Kabel (70) mit einem ersten elektrischen Anschluss (71) sowie einen Externanschluss (74) aufweist, wobei der Externanschluss (74) zum Anschluss zu einer externen elektrischen Energiequelle vorgesehen ist.

8. Warnmittel (1) nach Anspruch 7, **dadurch gekennzeichnet, dass** das elektrische Kabel (70) weiter einen zweiten elektrischen Anschluss (72) und einen dritten elektrischen Anschluss (73) umfasst, wobei der erste elektrische Anschluss (71) zur elektrischen Versorgung des ersten Beleuchtungsmittel (40) vorgesehen ist, und wobei der zweite elektrische Anschluss (72) zur elektrischen Versorgung des zweiten Beleuchtungsmittel (50) vorgesehen ist, und wobei der dritte elektrische Anschluss (73) zur elektrischen Versorgung der Rundumleuchte (60) vorgesehen ist.

9. Warnmittel (1) nach Anspruch 7 oder 8, **dadurch gekennzeichnet, dass** die elektrische Versorgung des ersten elektrischen Anschlusses (71), des zweiten elektrischen Anschlusses (72) und des dritten elektrischen Anschlusses (73) jeweils mittels eines Schalters unterbrechbar ist.

10. Warnmittel (1) nach einem der Ansprüche 7 bis 9, **dadurch gekennzeichnet, dass** das elektrische Kabel (70) weiter eine Steuerungsleitung umfasst, über die die elektrische Versorgung des ersten elektrischen Anschlusses (71), des zweiten elektrischen Anschlusses (72) und des dritten elektrischen Anschlusses (73) unterbrechbar ist.

11. Warnmittel (1) nach einem der Ansprüche 7 bis 10, **dadurch gekennzeichnet, dass** die Warneinheit (200) eine elektrische Versorgungsleiste (80) aufweist, die einen Stecker (84) zur elektrischen Verbindung mit dem ersten elektrischen Anschluss (71) des elektrischen Kabels (70) umfasst, einen ersten elektrischen Leistenanschluss (81) für die elektrischen Versorgung des ersten Beleuchtungsmittel (40) umfasst, einen zweiten elektrischen Leistenanschluss (82) für die elektrischen Versorgung des zweiten Beleuchtungsmittel (50) umfasst, einen dritten elektrischen Leistenanschluss (83) für die elektrischen Versorgung der Rundumleuchte (60) umfasst.

12. Warnmittel (1) nach Anspruch 11, **dadurch gekennzeichnet, dass** die elektrische Versorgung des Steckers (84), des ersten elektrischen Leistenanschluss (81), des zweiten elektrischen Leistenanschluss (82) und des dritten elektrischen Leistenanschluss (83) jeweils mittels eines Schalters unterbrechbar ist.

13. Warnmittel (1) nach Anspruch 11 oder 12, **dadurch gekennzeichnet, dass** das elektrische Kabel (70) weiter eine Steuerungsleitung umfasst, über die die elektrische Versorgung des Steckers (84), des ersten Leistenanschluss (81), des zweiten elektrischen Leistenanschluss (82) und des dritten elektrischen Leistenanschluss (83) jeweils unterbrechbar ist.
